(19)

Europäisches
Patentamt
European
Patent Office
Office européen
des brevets

(11) **EP 4 105 843 A1**

(12) **EUROPEAN PATENT APPLICATION**

(43) Date of publication:
**21.12.2022 Bulletin 2022/51**

(21) Application number: **22159139.9**

(22) Date of filing: **28.02.2022**

(51) International Patent Classification (IPC):
**G06N 7/00** *(2006.01)* **G06N 20/00** *(2019.01)*

(52) Cooperative Patent Classification (CPC):
**G06F 7/5443; G06N 7/005; G06N 20/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2021 JP 2021101298**

(71) Applicant: **FUJITSU LIMITED
Kawasaki-shi, Kanagawa 211-8588 (JP)**

(72) Inventors:
• **Konoshima, Makiko
Kawasaki-shi, Kanagawa, 211-8588 (JP)**
• **Tamura, Hirotaka
Yokohama-shi, Kanagawa, 233-0066 (JP)**

(74) Representative: **Hoffmann Eitle
Patent- und Rechtsanwälte PartmbB
Arabellastraße 30
81925 München (DE)**

(54) **DATA PROCESSING APPARATUS, COMPUTER-READABLE RECORDING MEDIUM STORING PROGRAM, AND METHOD OF PROCESING DATA**

(57) An apparatus of searching for a combination of values of state variables with which a value of an evaluation function of an Ising-type becomes a local minimum or maximum, the data processing apparatus including: a memory configured to store first local fields representative of first change amounts of the value of the evaluation function in a case where a value of each of the state variables changes, first coefficients indicative of strength of influence of each of the state variables on each of constraint terms representative of a constraint condition, and second local fields represented by a sum of a total sum of products of each of the first coefficients and each of the state variables and a second coefficient related to the constraint condition; and a processor configured to perform: reading any of the first coefficients related to a first state variable being any of the state variables.

FIG. 1

$$h_i^{XX} = \sum_{k=1}^{N} W_{ik} x_k + b_i \qquad h_i^{XY} = \sum_{j=1}^{M} F_{ij} y_j$$

$$h_j^{YX} = \sum_{k=1}^{N} C_{jk} x_k + d_j \xrightarrow[\text{CHANGES}]{x_i} h_j^{YX} = h_j^{YX} + C_{ji}\,\Delta x_i$$

$$y_j = f(h_j^{YX}) \qquad \substack{\text{INEQUALITY} \\ \text{CONSTRAINT:}} \ f(h_j^{YX}) = \max(0, h_j^{YX})$$

$$E = -\sum_{i=1}^{N}\sum_{j>i}^{N} W_{ij}\,x_i x_j - \sum_{i=1}^{N} b_i x_i \qquad V = \frac{1}{2}\sum_{j=1}^{M} \lambda_j y_j^2$$

$$\Delta H = \Delta E + \Delta V = -(h_i^{XX}+h_i^{XY})\cdot \Delta x_i$$

EP 4 105 843 A1

**Description**

FIELD

The embodiments discussed herein are related to a data processing apparatus, a computer-readable recording medium storing a program, and a method of processing data.

BACKGROUND

As an apparatus that calculates a large-scale discrete optimization problem which is not easily handled by a Neumann-type computer, there is an Ising machine (also referred to as a Boltzmann machine) using an evaluation function of an Ising type (also referred to as an energy function or the like).

The Ising machine converts a discrete optimization problem into an Ising model representative of a behavior of a spin of a magnetic body. Based on the Markov chain Monte Carlo method such as a simulated annealing method or a replica exchange method (also referred to as, for example, a parallel tempering method), the Ising machine searches for a state of the Ising model that sets a value of the evaluation function of the Ising type (corresponding to energy) to a local minimum. A state having the minimum value out of the local minimums of the evaluation function is an optimal solution. By changing the sign of the evaluation function, the Ising machine is also able to search for a state that sets the value of the evaluation function to a local maximum. The state of the Ising model may be expressed by a combination of values of a plurality of state variables. As the value of each of the state variables, 0 or 1 may be used.

The evaluation function of the Ising type is defined by, for example, a function of a quadratic form such as Expression (1) below.

$$E = -\sum_{i=1}^{N}\sum_{j>i}^{N} W_{ij}x_i x_j - \sum_{i=1}^{N} b_i x_i \qquad (1)$$

The first term on the right side is the total of products each obtained from values of two state variables (0 or 1) and a weight value (indicative of the intensity of interaction between the two state variables) in one of all the combinations, without omission and duplication, of N state variables in the Ising model. Here, $x_i$ is a state variable with an identification number i, $x_j$ is a state variable with an identification number j, and $W_{ij}$ is a weight value indicative of the intensity of interaction between the state variables with the identification numbers i and j. The second term on the right side is the total sum of products each obtained from a bias coefficient and a state variable for one of the identification numbers. Here, $b_i$ indicates a bias coefficient for the identification number = i.

An energy change amount ($\Delta E_i$) due to a change in the value of $x_i$ is represented by Expression (2) below.

$$\Delta E_i = -\Delta x_i (\sum_{j}^{N} W_{ij}x_j + b_i) = -\Delta x_i h_i \qquad (2)$$

In Expression (2), $\Delta x_i$ is -1 when $x_i$ changes from 1 to 0, whereas $\Delta x_i$ is 1 when the state variable $x_i$ changes from 0 to 1. Here, $h_i$ is referred to as a local field and $\Delta E_i$ is the product of $h_i$ and a sign (+1 or -1) depending on $\Delta x_i$. For this reason, $h_i$ may also be referred to as a variable that represents the energy change amount or a variable that determines the energy change amount.

For example, in the case where $\Delta E_i$ is smaller than a noise value obtained based on a random number and a value of a temperature parameter, a process of updating the value of $x_i$ to generate a state transition and also updating the local fields is repeated.

Meanwhile, some discrete optimization problems have a constraint condition to be satisfied by a solution. For example, in a knapsack problem that is one of discrete optimization problems, there is a constraint condition that the total capacity of loads that may be packed in the knapsack is smaller than or equal to the capacity of the knapsack. Such a constraint condition is referred to as an inequality constraint and may be represented by a constraint term having a value other than 0 when the constraint condition is not satisfied.

A total magnitude (energy) of the constraint term of the inequality constraint may be represented by, for example Expression (3) below.

$$V = \sum_{j=1}^{M} \left( max \left[ 0, \sum_{i=1}^{N} c_{ji}x_i - u_j \right] \right) \qquad (3)$$

In Expression (3), M represents the number of constraint terms of the inequality constraint, and $c_{ji}$ is a coefficient for each state variable related to each constraint term. An upper limit of a certain resource in the inequality constraint is represented by $u_j$. A function that outputs a larger value of arguments a and b is max [a, b]. For any of j = 1 to M, V has a value other than 0 when the total sum of $c_{ji}x_i$ exceeds $u_j$ (when the constraint condition is not satisfied).

The entire energy function including the constraint term may be represented as H = E + V.

Expression (3) is a discontinuous function of a linear form unlike a function of a quadratic form such as Expression (1). Accordingly, in the related art, in order to allow an inequality constraint to be handled by the Ising machine, a technique for converting a discontinuous function of a linear form into a function of a quadratic form has been proposed.

However, in the case where a discrete optimization problem is calculated by using a constraint term of an inequality constraint converted into a quadratic form, obtaining a solution by the Ising machine may be difficult due to, for example, an increase in complexity in processing.

Accordingly, a related-art technique has been proposed in which a constraint term of an inequality constraint as described above remaining in the linear form is used and a solution is obtained by the Ising machine.

Examples of the related art include as follows: Japanese Laid-open Patent Publication No. 2019-179364; and Japanese Laid-open Patent Publication No. 2020-204928.

Examples of the related art also include as follows: V.S.Denchev, N.Ding, S.V.N.Vishwanathan, and H.Neven, "Robust classification with adiabatic quantum optimization", in Proc. ICML'12, pp. 1003-1010, 2012.

SUMMARY

TECHNICAL PROBLEM

With the related-art technique in which the solution is obtained by using the constraint term of the inequality constraint remaining in the linear form, to calculate the change amount of the entire energy function due to the change in the value of the state variable, the entire magnitude of the constraint term is calculated by using all the coefficients ($c_{ij}$ in the example of Expression (3) above) related to each constraint term. In some cases, the number of the coefficients related to each constraint reaches 1000 or more, and a calculation amount may increase with the above-described related-art technique.

In one aspect, an object of the present disclosure is to provide a data processing apparatus, a program, and a method of processing data which may decrease a calculation amount of a discrete optimization problem having a constraint condition.

SOLUTION TO PROBLEM

According to an aspect of the embodiments, there is provided a data processing apparatus of searching for a combination of values of a plurality of state variables with which a value of an evaluation function of an Ising-type becomes a local minimum or a local maximum. In an example, the data processing apparatus includes: a memory configured to store a plurality of first local fields representative of a plurality of first change amounts of the value of the evaluation function in a case where a value of each of the plurality of state variables changes, a plurality of first coefficients indicative of strength of influence of each of the plurality of state variables on each of a plurality of constraint terms representative of a constraint condition, and a plurality of second local fields represented by a sum of a total sum of products of each of the plurality of first coefficients and each of the plurality of state variables and a second coefficient related to the constraint condition; and a processor coupled to the memory, the processor being configured to perform processing including: reading, from the memory, a first coefficient, out of the plurality of first coefficients, related to a first state variable which is any of the plurality of state variables; calculating updated values of the plurality of second local fields in a case where a value of the first state variable changes based on the first coefficient; calculating, in the case where the value of the first state variable changes, a second change amount of a sum of the evaluation function and an entire magnitude of the plurality of constraint terms based on the updated values and a first local field, out of the plurality of first local fields, related to the first state variable; and determining whether to allow a change in the value of the first state variable based on a result of comparison between the second change amount and a predetermined value.

ADVANTAGEOUS EFFECTS OF INVENTION

In the one aspect, according to the present disclosure, the calculation amount of the discrete optimization problem having the constraint condition may be decreased.

BRIEF DESCRIPTION OF DRAWINGS

FIG. 1 illustrates an example of a data processing apparatus and a method of processing data according to a first embodiment;
FIG. 2 is a block diagram illustrating a hardware example of a data processing apparatus according to a second embodiment;
FIG. 3 is a block diagram illustrating a functional example of the data processing apparatus;
FIG. 4 is a flowchart illustrating a flow of an example of the method of processing data;
FIG. 5 is a flowchart illustrating a flow of an example of a procedure of an initialization process;
FIG. 6 is a flowchart illustrating a flow of an example of a ΔH calculation procedure;
FIG. 7 illustrates an example of a data processing apparatus according to a third embodiment; and
FIG. 8 illustrates a configuration of an example of a field-programmable gate array (FPGA).

DESCRIPTION OF EMBODIMENTS

Hereinafter, the embodiments of the present disclosure will be described with reference to the drawings.

(First Embodiment)

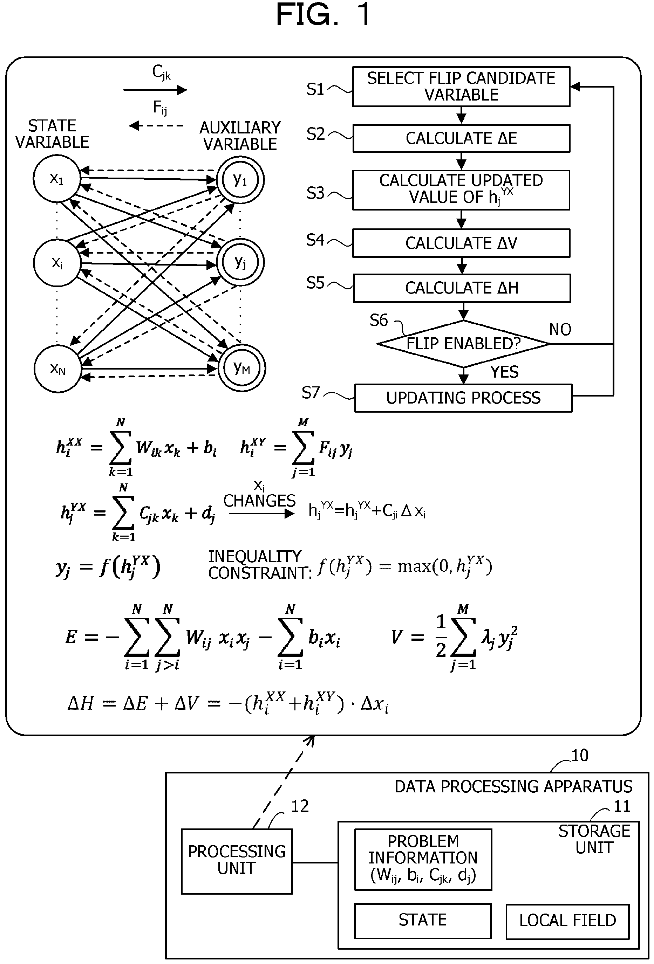

FIG. 1 illustrates an example of a data processing apparatus and a method of processing data according to a first embodiment.
A data processing apparatus 10 according to the first embodiment includes a storage unit 11 and a processing unit 12.
The storage unit 11 is, for example, a volatile storage device including an electronic circuit such as a dynamic random-access memory (DRAM) or a non-volatile storage device including an electronic circuit such as a hard disk drive (HDD) or a flash memory. The storage unit 11 may include an electronic circuit such as a register.
The storage unit 11 stores problem information of a discrete optimization problem, values of a plurality of (hereafter, N) state variables included in an evaluation function of an Ising type representative of the discrete optimization problem (see Expression (1) described above) and values of individual local fields, which will be described later.
The problem information includes, for example, coefficients ($c_{jk}$, $d_j$), which will be described later, other than weight values ($W_{ij}$) and a bias coefficient ($b_i$) indicated in Expression (1).
In FIG. 1, $h_i^{XX}$, $h_i^{XY}$, and $h_j^{YX}$ are indicated as the local fields stored in the storage unit 11. Also in FIG. 1, M auxiliary variables ($y_i$, ..., $y_j$, ..., $y_M$) corresponding to the number of constraint terms (M) are represented. Each of $y_1$ to $y_M$ is a variable having 1 bit or a real number able to be calculated from a value of $x_1$ to $x_N$ and represents the constraint term.
The local field $h_i^{XX}$ is a local field representative of a change amount of a value of the evaluation function of Expression (1) in the case where a value of a state variable with an identification number = i (i = 1 to N) changes, and $h_i^{XX}$ corresponds to $h_i$ of Expression (2). For example, $h_i^{XX}$ may be represented by Expression (4) below.

$$h_i^{XX} = \sum_{k=1}^{N} W_{ik} x_k + b_i \qquad (4)$$

The local field $h_j^{YX}$ may be represented by Expression (5) below.

$$h_j^{YX} = \sum_{k=1}^{N} C_{jk} x_k + d_j \qquad (5)$$

In Expression (5), $C_{jk}$ is a coefficient indicative of the strength of influence of the state variable with the identification number = k on the jth constraint term. For each of the constraint terms, N coefficients $C_{jk}$ are provided and represented by a matrix C of M rows by N columns. In Expression (5), $d_j$ is the coefficient related to the constraint condition for the jth constraint term.

In the case where the constraint condition is the aforementioned inequality constraint, $C_{jk}$ is a $c_{ji}$ of Expression (3), and $d_j$ is a value obtained by multiplying $u_j$ of Expression (3) by -1.

Furthermore, $h_i^{XY}$ may be represented by Expression (6) below.

$$h_i^{XY} = \sum_{j=1}^{M} F_{ij} y_j \qquad (6)$$

In Expression (6), $y_j$ is an auxiliary variable representative of the jth constraint term and may be expressed as $y_j = f(h_j^{YX})$. For example, in the case where $y_j$ is an auxiliary variable related to an inequality constraint, it may be represented as $y_j = f(h_j^{YX}) = \max[0, h_j^{YX}]$.

The strength of the influence of the jth constraint term on the state variable of $x_i$ is indicated by $F_{ij}$ which is a coefficient indicative of the magnitude of a restoring force acting on $x_i$ in the case where the constraint condition is not satisfied and which is represented by a matrix F of N rows by M columns. For example, $F_{ij}$ may be represented as $F_{ij} = -C_{ji}$. For example, the matrix F may be obtained by transposing the matrix C and inverting the sign.

An entire magnitude of M constraint terms (energy) is V which may be represented by Expression (7) below by using $y_j$.

$$V = \frac{1}{2} \sum_{j=1}^{M} \lambda_j y_j^2 \qquad (7)$$

In Expression (7), $\lambda_j$ is a weight for each constraint term and may have different values for different constraint terms.

The storage unit 11 may store various types of data such as calculation conditions used when the processing unit 12 executes the method of processing data, which will be described later (for example, the number of replicas, a value of a temperature parameter set for each of the replicas, a replica exchange cycle, and a calculation end condition in the case where a replica exchange method is executed). In the case where the processing unit 12 executes part or the entirety of processing of the method of processing data, which will be described later, by using software, a program for executing the processing is stored in the storage unit 11.

For example, the processing unit 12 may be realized by using a processor that is hardware such as a central processing unit (CPU), a graphics processing unit, (GPU) or a digital signal processor (DSP). Instead, the processing unit 12 may be realized by using an electronic circuit such as an application-specific integrated circuit (ASIC) or a field-programmable gate array (FPGA).

For example, the processing unit 12 searches for a state in which the value of the evaluation function (energy) represented by Expression (1) becomes a local minimum. The optimal solution is a state having the minimum value among local minimums of the evaluation function. By changing the signs of the constraint terms indicated in Expression (7) and the evaluation function represented by Expression (1), the processing unit 12 may search for a state in which the value of the evaluation function becomes the local maximum (in this case, a state having the maximum value is the optimal solution).

FIG. 1 illustrates a flow of an example of part of processing performed by the processing unit 12.

Here, it is assumed that values based on the initial values of $x_1$ to $x_N$ are stored in the storage unit 11 as $h_i^{XX}$, $h_i^{XY}$, $h_j^{YX}$, $y_j$, E, and V.

The processing unit 12 selects, out of $x_1$ t0 $x_N$, a candidate state variable the value of which is to be changed (hereafter referred to as a flip candidate) (step S1). For example, the processing unit 12 selects a flip candidate state variable randomly or in a predetermined order.

The processing unit 12 calculates a change amount of the value of the evaluation function ($\Delta E$) in the case where the value of the selected state variable changes (step S2). In the case where the selected state variable is $x_i$, $\Delta E$ may be calculated by using a product of $-\Delta x_i$ and $h_i^{XX}$.

In order to calculate a change amount of V due to the change in the value of a selected state variable ($\Delta V$), the

processing unit 12 uses a coefficient related to the selected state variable out of $C_{jk}$ to calculate updated values of M local fields $h_j^{yx}$ due to the change in the value of the state variable (step S3). The processing of step S3 corresponds to reflecting the influence of the change in the value of the selected state variable on the constraint term. In the case where the selected state variable is $x_i$, the processing unit 12 may calculate the updated values of $h_j^{yx}$ by adding $C_{ji}\Delta x_i$ to the original $h_j^{YX}$. Thus, it is sufficient that the processing unit 12 read the coefficients in an i column in the matrix C of M × N.

Based on the updated values of the M local fields $h_j^{YX}$, the processing unit 12 calculates $\Delta V$ (step S4). Based on the updated values of $h_j^{YX}$, the processing unit 12 may calculate $y_j$, calculate V after the change in the value of the flip candidate state variable from Expression (7), and calculate $\Delta V$ by using the difference from original V. The processing unit 12 may also calculate $h_i^{XY}$ by using Expression (6) by using $y_j$ calculated based on the updated values of $h_j^{YX}$ and may calculate $\Delta V$ by using the products of $-\Delta x_i$ and $h_i^{XY}$.

By using the sum of $\Delta E$ and $\Delta V$, the processing unit 12 calculates $\Delta H$ (step S5).

Based on a result of comparison between $\Delta H$ and a predetermined value, the processing unit 12 determines whether to allow the change in the value of the flip candidate state variable (whether to enable or disable the flipping) (step S6). Hereinafter, this determination process is referred to as a flip determination process.

The predetermined value is, for example, a noise value obtained based on a random number and the value of the temperature parameter. The processing unit 12 determines that the change in the value of the flip candidate state variable is allowed in the case where, for example, $\Delta H$ is smaller than log (rand) × T which is an example of the noise value obtained based on a uniform random number (rand) of greater than or equal to 0 and smaller than or equal to 1 and the temperature parameter (T).

The processing unit 12 performs processing in step S7 in the case where it is determined that the flipping is enabled or repeats the processing from step S1 in the case where it is determined that the flipping is not enabled.

In the processing of step S7, the processing unit 12 updates the state stored in the storage unit 11 by changing the value of the selected state variable and also updates $h_i^{xx}$, $h_i^{XY}$, and $h_j^{yx}$ due to the change.

For example, updating of $h_i^{XX}$ due to a change in a value of $x_a$ may be performed by using the following expression: $h_i^{XX} = h_i^{XX} + W_{ia}\Delta x_a$. For example, it is sufficient that the processing unit 12 read weight values in an a column in a matrix of N × N weight values.

Updating of $h_j^{YX}$ is performed by determining the updated values calculated in the processing in step S3.

Furthermore, updating of $h_i^{XY}$ may be performed by calculating $y_j$ after the updating based on the updated values of $h_j^{YX}$ calculated in the processing of step S3 and using a difference ($\Delta y_j$) from $y_j$ before the updating by using the following expression: $h_i^{XY} = h_i^{XY} + F_{ij}\Delta y_j$. As described above, since $F_{ij} = -C_{ji}$, $F_{ij}$ may be calculated by using the coefficients in the i column of the matrix C read in the processing of step S3.

The processing unit 12 repeatedly performs the processing from steps S1 to S7 until a predetermined end condition is satisfied.

The order of the above-described processes is merely exemplary and may be changed as appropriate.

Although an example in which the processing of steps S2 to S6 is performed by selecting the flip candidate state variables one by one out of N state variables has been described in the above description, the processing of steps S2 to S6 may be performed in parallel for a plurality of (for example, all of N) state variables. In this case, when there are a plurality of state variables the values of which are allowed to be changed, the processing unit 12 selects the state variables the values of which are to be changed randomly or in accordance with a predetermined rule.

In the case of performing a simulated annealing method, the processing unit 12 decreases the value of the above-described temperature parameter (T) according to a predetermined temperature parameter change schedule every time, for example, the flip determination process is repeatedly performed a predetermined number of times. The processing unit 12 outputs the state obtained in the case where the flip determination process has been repeatedly performed the predetermined number of times as a calculation result of the discrete optimization problem (for example, displays on a display device not illustrated). The processing unit 12 may update the value of the evaluation function (energy) represented by Expression (1) every time the change in the value of the state variable is generated and cause the storage unit 11 to hold the energy and the state in the case where the energy becomes the minimum energy up to that time. In this case, the processing unit 12 may output, as the calculation result, the state corresponding to the minimum energy stored after the flip determination process has been repeatedly performed the predetermined number of times.

In the case where the processing unit 12 performs the replica exchange method, the processing unit 12 performs the processing of steps S1 to S3 described above in a plurality of different replicas in which different values of the temperature parameter are set. Every time the flip determination process is repeatedly performed a predetermined number of times, the processing unit 12 performs a replica exchange. For example, the processing unit 12 randomly selects two replicas out of the plurality of replicas and exchanges the value of the temperature parameter or the state between the two selected replicas with a predetermined exchange probability based on an energy difference between the replicas and the difference in the value of the temperature parameter between the replicas. For example, the processing unit 12 updates the value of the evaluation function (energy) represented by Expression (1) every time the change in the value of the state variable is generated in each of the replicas and holds the energy and the state in the case where the energy becomes the minimum energy up to that time. The processing unit 12 outputs, as the calculation result, the state corresponding to the minimum energy in all the replicas out of the minimum energies stored after the above-described flip determination process has been repeatedly performed the predetermined number of times in each of the replicas.

With the data processing apparatus 10 and the method of processing data as described above, $\Delta H$ used when determining whether to enable or disable the change in the value of the state variable is calculated based on $h_i^{XX}$ and $h_j^{YX}$ (or $h_i^{XY}$ calculated from $h_j^{YX}$ by using Expression (6)). Based on the result of the comparison between $\Delta H$ and the predetermined value, whether to allow the change in the value of the state variable is determined. As described above, in the calculation of the updated values of $h_j^{yx}$ for calculating $\Delta H$, it is sufficient that the coefficients in a certain column of the matrix C be read.

Thus, the amount of calculation may be decreased compared to the case where the flip determination for a certain state variable is performed by using all the elements of the matrix C. Furthermore, the amount of data read at a time from the storage unit 11 may be decreased.

Since $y_j$ which is the auxiliary variable and $h_i^{XX}$, $h_i^{XY}$, and $h_j^{YX}$ which are the local fields are obtained from the values of the state variables or the like, none of $y_j$, $h_i^{XX}$, $h_i^{XY}$, and $h_j^{YX}$ is an independent variable and increases a searching space.

A constraint condition applicable in the method of processing data according to the first embodiment is not limited to the inequality constraint. An equality constraint or an absolute value constraint may be applicable.

The equality constraint is a constraint that sets a value equivalent to a resource instead of setting an upper limit of a certain resource as in the inequality constraint.

A constraint term of the equality constraint may be represented by, for example, Expression (8) below.

$$V = \sum_{j=1}^{M} \left( \sum_{i=1}^{N} c_{ji} x_i - u_j \right)^2 \tag{8}$$

In Expression (8), for any of j = 1 to M, V has a value other than 0 in the case where the total sum of $c_{ji}x_i$ is a value different from the $u_j$ representing the resource (in the case where the constraint condition is not satisfied).

The absolute value constraint is a constraint in which the value of V which is a constraint term increases as the absolute value of the difference from a certain resource increases. A constraint term of the absolute value constraint may be represented by, for example, Expression (9) below.

$$V = \sum_{j=1}^{M} abs \left( \sum_{i=1}^{N} c_{ji} x_i - u_j \right) \tag{9}$$

In Expression (9), abs is a function that outputs an absolute value of an argument. For example, V is the sum of the absolute values of differences between the total sum of $c_{ji}x_i$ and $u_j$ which is the resource for each of j = 1 to M. The constraint term of the absolute value constraint may also be represented by combining two constraint terms of the inequality constraint illustrated in Expression (3).

In the case where the equality constraint or the absolute value constraint as described above is applied, it is sufficient that $C_{jk}$ of Expression (5) be set as $c_{ji}$ of Expression (8) or Expression (9) and $d_j$ of Expression (5) be set as a value obtained by multiplying $u_j$ of Expression (3) by -1. As $y_j$ of Expression (6), in the case where $y_j$ is an auxiliary variable related to the equality constraint, $y_j$ may be represented as $y_j = f(h_j^{YX}) = (h_j^{YX})^2$. As $y_j$ of Expression (6), in the case where $y_j$ is an auxiliary variable related to the absolute value constraint, $y_j$ may be represented as $y_j = f(h_j^{YX}) = abs(h_j^{YX})$.

Accordingly, also in the case where these constraint conditions are used, substantially the same processing as that performed in the case where the inequality constraint is used may be applied other than the change in the function of $f(h_j^{YX})$.

(Second Embodiment)

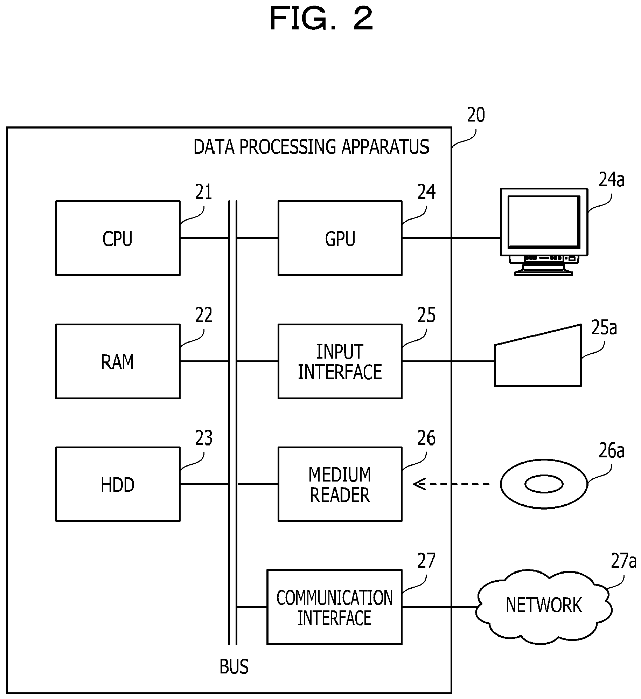

FIG. 2 is a block diagram illustrating a hardware example of a data processing apparatus according to a second embodiment.

A data processing apparatus 20 is, for example, a computer and includes a CPU 21, a random-access memory (RAM) 22, an HDD 23, a GPU 24, an input interface 25, a medium reader 26, and a communication interface 27. The above-described devices are coupled to a bus.

The CPU 21 is a processor including an arithmetic circuit that executes program instructions. The CPU 21 loads at least a subset of programs and data stored in the HDD 23 into the RAM 22 and executes the programs. The CPU 21 may include a plurality of processor cores, or the data processing apparatus 20 may include a plurality of processors. Processes to be described below may be executed in parallel by using the plurality of processors or processor cores. A set of a plurality of processors (multiprocessor) may be referred to as a "processor".

The RAM 22 is a volatile semiconductor memory that temporarily stores the programs executed by the CPU 21 or the data used for the arithmetic by the CPU 21. The data processing apparatus 20 may include a memory of a type other than the type of the RAM 22 and may include a plurality of memories.

The HDD 23 is a non-volatile storage device that stores the programs of software such as an operating system (OS), middleware, and application software, and data. Examples of the programs include a program for causing the data processing apparatus 20 to execute a process of searching for a solution to a discrete optimization problem. The data processing apparatus 20 may include another type of the storage device such as a flash memory or a solid-state drive (SSD) and may include a plurality of non-volatile storage devices.

The GPU 24 outputs images to a display 24a coupled to the data processing apparatus 20 in accordance with instructions from the CPU 21. As the display 24a, a cathode ray tube (CRT) display, a liquid crystal display (LCD), a plasma display panel (PDP), an organic electro-luminescence (OEL) display, or the like may be used.

The input interface 25 obtains an input signal from an input device 25a coupled to the data processing apparatus 20 and outputs the input signal to the CPU 21. As the input device 25a, a pointing device such as a mouse, a touch panel, a touchpad, and a trackball, as well as a keyboard, a remote controller, a button switch, or the like may be used. A plurality of types of input devices may be coupled to the data processing apparatus 20.

The medium reader 26 is a reading device that reads programs and data recorded in a recording medium 26a. As the recording medium 26a, for example, a magnetic disk, an optical disk, a magneto-optical (MO) disk, a semiconductor memory, or the like may be used. Examples of the magnetic disk include a flexible disk (FD) and an HDD. Examples of the optical disk include a compact disc (CD) and a Digital Versatile Disc (DVD).

For example, the medium reader 26 copies the programs or the data read from the recording medium 26a to another recording medium such as the RAM 22 or the HDD 23. For example, the read programs are executed by the CPU 21. The recording medium 26a may be a portable-type recording medium and, in some cases, is used to distribute the programs and the data. The recording medium 26a and the HDD 23 may be referred to as computer-readable recording media.

The communication interface 27 is an interface that is coupled to a network 27a and that communicates with another information processing apparatus via the network 27a. The communication interface 27 may be a wired communication interface coupled to a communication device such as a switch via a cable or a wireless communication interface coupled to a base station via a wireless link.

Next, the functions and a processing procedure of the data processing apparatus 20 are described.

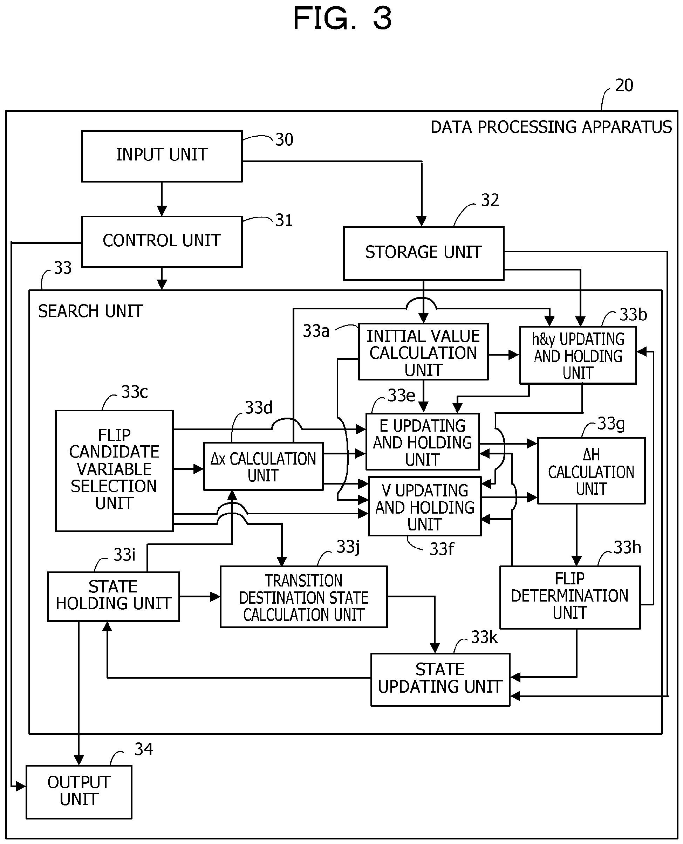

FIG. 3 is a block diagram illustrating a functional example of the data processing apparatus.

The data processing apparatus 20 includes an input unit 30, a control unit 31, a storage unit 32, a search unit 33, and an output unit 34.

The input unit 30, the control unit 31, the search unit 33, and the output unit 34 may be implemented by using, for example, program modules executed by the CPU 21 or a storage area (a register or a cache memory) in the CPU 21. The storage unit 32 may be implemented by using, for example, a storage area reserved in the RAM 22 or the HDD 23.

The input unit 30 accepts, for example, input of initial values of the state variables ($x_1$ to $x_N$), the problem information, and calculation conditions. The problem information includes, for example, the coefficients ($C_{jk}$, $d_j$) indicated in Expression (5), the coefficient ($F_{ij}$) indicated in Expression (6), and the weight ($\lambda_j$) for each constraint indicated in Expression (7) in addition to the weight value ($W_{ij}$) and the bias coefficient ($b_i$) indicated in Expression (1). Examples of the calculation conditions include, for example, the number of replicas, the replica exchange cycle, the value of the temperature parameter set for each of the replicas in the case where the replica exchange method is executed, and the temperature parameter change schedule, the calculation end condition, and so forth in the case where the simulated annealing method is performed.

These pieces of information may be input by a user operating the input device 25a or input via the recording medium 26a or the network 27a.

The control unit 31 controls the units in the data processing apparatus 20 to cause the units to execute processing to be described later.

The storage unit 32 stores the initial values of $x_1$ to $x_N$, $W_{ij}$, $b_i$, $C_{jk}$, $d_j$, $F_{ij}$, and $\lambda_j$. The storage unit 32 may store various types of information such as the other pieces of the problem information and the other calculation conditions.

The search unit 33 includes an initial value calculation unit 33a, an h&y updating and holding unit 33b, a flip candidate variable selection unit 33c, a $\Delta x$ calculation unit 33d, an E updating and holding unit 33e, and a V updating and holding unit 33f. The search unit 33 further includes a $\Delta H$ calculation unit 33g, a flip determination unit 33h, a state holding unit 33i, a transition destination state calculation unit 33j, and a state updating unit 33k.

The initial value calculation unit 33a reads the initial values of $x_1$ to $x_N$, $b_i$, $C_{jk}$, and $d_j$ stored in the storage unit 32 and, based on these values, calculates the initial values of $h_i^{XX}$ and $h_j^{YX}$ by using Expressions (4) and (5). Also, the initial value calculation unit 33a calculates the initial value of $y_j$ from the initial value of $h_j^{yx}$ by using the following expression: $y_j = f(h_j^{YX})$.

In the case where $y_j$ is an auxiliary variable related to the inequality constraint, it may be represented as $y_j = f(h_j^{YX}) = \max[0, h_j^{YX}]$ as described above. In the case where $y_j$ is an auxiliary variable related to the equality constraint, it may be represented as $y_j = f(h_j^{YX}) = (h_j^{YX})^2$ as described above. In the case where $y_j$ is an auxiliary variable related to the absolute value constraint, it may be represented as $y_j = f(h_j^{YX}) = \mathrm{abs}(h_j^{YX})$ as described above.

Furthermore, the initial value calculation unit 33a reads $F_{ij}$ stored in the storage unit 32 and calculates, based on the calculated initial value of $y_j$ and $F_{ij}$, the initial value of $h_i^{XY}$ by using Expression (6).

The h&y updating and holding unit 33b updates $h_i^{XX}$, $h_j^{YX}$, $h_i^{XY}$, and $y_j$ and holds values of these.

The updated value of $h_i^{XX}$ due to the change in the value of $x_a$ may be represented by the following expression: $h_i^{XX} = h_i^{XX} + W_{ia}\Delta x_a$. The updated value of $h_j^{yx}$ due to the change in the value of $x_a$ may be represented by the following expression: $h_j^{yx} = h_j^{YX} + C_{ja}\Delta x_a$. The updated value of $h_i^{XY}$ due to the change in the value of $x_a$ may be represented by the following expression: $h_i^{XY} = h_i^{XY} + F_{ij}\Delta y_j$. Calculation of $\Delta y_j$ is performed by using an expression $\Delta y_j = f(h_j^{YX}) - y_j$ using the updated value of $h_j^{YX}$.

The flip candidate variable selection unit 33c selects a flip candidate state variable. For example, the flip candidate variable selection unit 33c selects a flip candidate state variable randomly or in a predetermined order. The flip candidate variable selection unit 33c outputs an identification number (1 to N) of the selected flip candidate state variable.

The $\Delta x$ calculation unit 33d calculates the change amount of the value of the selected flip candidate state variable. For example, when the flip candidate state variable is $x_a$, $\Delta x_a$ becomes -1 in the case where $x_a$ changes from 1 to 0, and $\Delta x_a$ becomes 1 in the case where the state variable $x_a$ changes from 0 to 1.

The E updating and holding unit 33e updates E which is the value of the evaluation function represented by Expression (1), and the E updating and holding unit 33e holds E. The change amount of E due to a change in the value of $x_a$ is $\Delta E$ which may be expressed as $\Delta E = -\Delta x_a h_a^{XX}$. Accordingly, in the case where the value of $x_a$ changes, E is updated to $E = E - \Delta x_a h_a^{XX}$.

The V updating and holding unit 33f updates V which is the entire size of the M constraint terms indicated in Expression (7), and the V updating and holding unit 33f holds V. In order to calculate $\Delta V$ which is the change amount of V due to the change in the value of $x_a$, the V updating and holding unit 33f calculates the updated values of M local fields $h_j^{yx}$ due to the change in $x_a$ by using the following expression: $h_j^{YX} = h_j^{YX} + C_{ja}\Delta x_a$. Based on the updated values of M local fields $h_j^{YX}$, the V updating and holding unit 33f may calculate M auxiliary variables $y_j$, calculate V after the change in the value of the flip candidate state variable from Expression (7), and calculate $\Delta V$ by using the difference from original V. The V updating and holding unit 33f may also calculate $h_a^{XY}$ by using Expression (6) by using $y_j$ calculated based on the updated values of $h_j^{YX}$ and may calculate $\Delta V$ by using the product of $-\Delta x_a$ and $h_a^{XY}$.

The $\Delta H$ calculation unit 33g calculates $\Delta H$ by adding $\Delta E$ and $\Delta V$ obtained when E is updated and V is updated by the E updating and holding unit 33e and the V updating and holding unit 33f.

Based on the result of the comparison between $\Delta H$ and the predetermined value, the flip determination unit 33h performs the flip determination process that determines whether to allow the change in the value of the flip candidate state variable. The predetermined value is, for example, a noise value obtained based on a random number and the value of the temperature parameter. The flip determination unit 33h determines that the change in the value of the flip candidate state variable is allowed in the case where, for example, $\Delta H$ is smaller than $\log(\mathrm{rand}) \times T$ which is an example of the noise value obtained based on a uniform random number (rand) greater than or equal to 0 and smaller than or equal to 1 and the temperature parameter (T).

The state holding unit 33i holds the values of N state variables ($x_1$ to $X_N$).

The transition destination state calculation unit 33j calculates a transition destination state in which the value of the state variable of the identification number output by the flip candidate variable selection unit 33c out of $x_1$ to $x_N$ is changed.

In the case where the flip determination unit 33h determines that the change in the value of the state variable is allowed, the state updating unit 33k uses the transition destination state calculated by the transition destination state calculation unit 33j to update the state held by the state holding unit 33i.

Under the control of the control unit 31, the search unit 33 searches for a state in which the value of the evaluation function (energy) becomes the local minimum by repeatedly performing the flip determination process and the updating process of each parameter as described above.

The output unit 34 outputs a search result (calculation result) of the search unit 33. For example, in the case where the replica exchange method is performed, the output unit 34 outputs, as the calculation result, the state corresponding to the minimum energy in all the replicas out of the minimum energies stored after the above-described flip determination process has been repeatedly performed the predetermined number of times in each of the replicas.

For example, the output unit 34 may output and display the calculation result on the display 24a, transmit the calculation result to another information processing apparatus via the network 27a, or store the calculation result in an external storage device.

Hereinafter, the processing procedure (a method of processing data) of the data processing apparatus 20 will be described. An example in which search is performed by using the replica exchange method is described below.

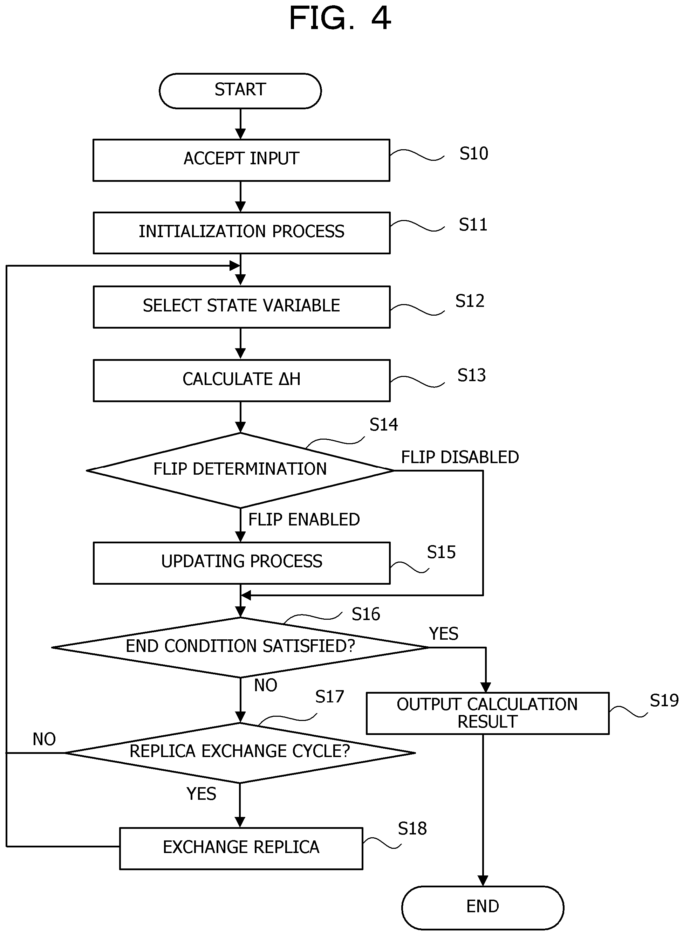

FIG. 4 is a flowchart illustrating a flow of an example of the method of processing data.

Step S10: The input unit 30 accepts input of the initial values of $x_1$ to $x_N$, the above-described problem information, and the calculation conditions. For example, the initial values of $x_1$ to $x_N$ and the problem information having been input are stored in the storage unit 32, and the calculation conditions having been input are supplied to the control unit 31.

Step S11: The initialization process is performed for each of the replicas. An example of a procedure of the initialization process will be described later.

For each of the replicas, the control unit 31 causes the search unit 33 to perform processing of steps S12 to S16 below.

Step S12: The flip candidate variable selection unit 33c of the search unit 33 selects a candidate state variable the value of which is to be changed (updated).

STEP S13: A search unit 33 calculates $\Delta H$. An example of a calculation procedure of $\Delta H$ of step S13 will be described later.

Step S14: The flip determination unit 33h performs the flip determination based on the result of the comparison between $\Delta H$ and a predetermined value. In the case where the flip determination unit 33h determines that the change in the value of the state variable is allowed, (in the case of "FLIP ENABLED"), processing of step S15 is performed. In the case where the flip determination unit 33h determines that the change in the value of the state variable is not allowed (in the case of "FLIP DISABLED"), processing of step S16 is performed.

Step S15: The updating process is performed. In the processing of step S15, the state is updated by the state updating unit 33k, $h_i^{xx}$, $h_j^{YX}$, $h_i^{XY}$, and $y_j$ are updated by the h&y updating and holding unit 33b, and E and V are updated by the E updating and holding unit 33e and the V updating and holding unit 33f.

Step S16: The control unit 31 determines whether the processing satisfies a predetermined end condition. For example, in the case where the number of times the search unit 33 performs the flip determination process has reached a maximum number of times of the flip determination, the control unit 31 determines that the end condition is satisfied. In the case where it is determined that the processing satisfies the predetermined end condition, processing of step S19 is performed. In the case where it is determined that the processing does not satisfy the predetermined end condition, processing of step S17 is performed.

Step S17: The control unit 31 determines whether the number of times of the flip determination indicates the replica exchange cycle. For example, in the case where a remainder of the number of times of the flip determination divided by a value indicative of the replica exchange cycle is 0, the control unit 31 determines that the number of times of the flip determination indicates the replica exchange cycle.

The control unit 31 performs processing of step S18 in the case where it is determined that the number of times of the flip determination indicates the replica exchange cycle. The control unit 31 causes the search unit 33 to repeat the processing from step S12 in the case where it is determined that the number of times of the flip determination does not indicate the replica exchange cycle.

Step S18: The control unit 31 performs a replica exchange process. For example, the control unit 31 randomly selects two replicas out of the plurality of replicas and exchanges the value of the set temperature parameter or the state between the two selected replicas with a predetermined exchange probability based on an energy difference between the replicas and the difference in the value of the temperature parameter between the replicas. After the processing of step S18, the control unit 31 causes the search unit 33 to repeat the processing from step S12.

Step S19: The output unit 34 outputs the calculation result. For example, the output unit 34 outputs, as the calculation result, the state corresponding to the minimum energy in all the replicas out of the minimum energies stored in each of the replicas. For example, the output unit 34 may output and display the calculation result on the display 24a, transmit the calculation result to another information processing apparatus via the network 27a, or store the calculation result in an external storage device.

Next, an example of the procedure of the initialization process of step S11 described above is described.

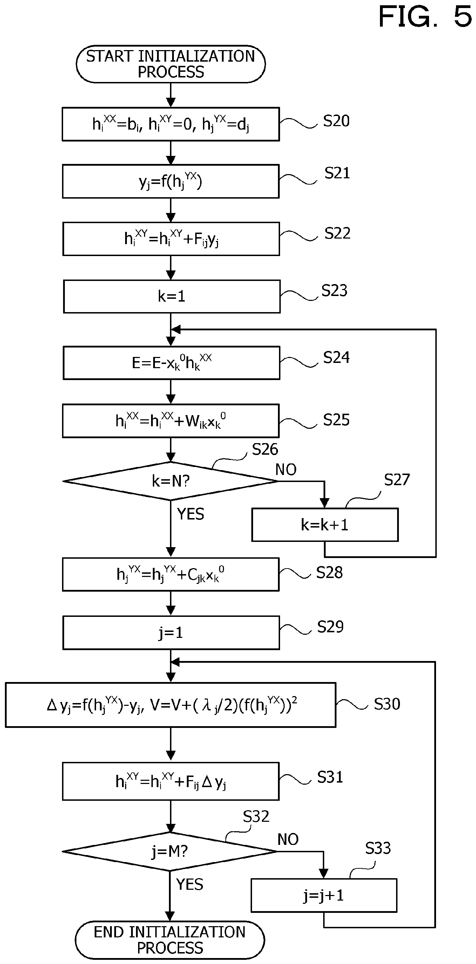

FIG. 5 is a flowchart illustrating a flow of the example of the procedure of the initialization process.

It is assumed that E and V are initialized to 0.

First, the initial value calculation unit 33a sets $h_i^{xx} = b_i$, $h_i^{XY} = 0$, and $h_j^{YX} = d_j$ for $h_i^{xx}$, $h_i^{XY}$, and $h_j^{YX}$ of every i from 1 to N and every j from 1 to M (step S20). The initial value calculation unit 33a calculates $y_j$ of every j from 1 to M by using an expression $y_j = f(h_j^{YX})$ (step S21). After the processing of step S21, the initial value calculation unit 33a

updates $h_i^{XY}$ of every i from 1 to N by using $F_{ij}y_j$ of every j from 1 to M and an expression $h_i^{XY} = h_i^{XY} + F_{ij}y_j$ (step S22).

Then, the initial value calculation unit 33a sets k that is a variable representative of the identification number of the state variable to k = 1 (step S23) and updates E by using the following expression: $E = E - x_k^0 h_k^{XX}$ (step S24). Furthermore, the initial value calculation unit 33a updates $h_i^{XX}$ of every i from 1 to N by using the following expression: $h_i^{XX} = h_i^{XX} + W_{ik}x_k^0$ (step S25). Here, $x_k^0$ represents an initial value of the state variable with an identification number = k.

After the processing of step S25, the initial value calculation unit 33a determines whether k = N holds (step S26). In the case where it is determined that k = N does not hold, k = k + 1 is set (step S27), and the processing from step S24 is repeated.

In the case where it is determined that k = N holds, by using an expression of $h_j^{YX} = h_j^{YX} + C_{jk}x_k^0$, the initial value calculation unit 33a updates $h_j^{YX}$ of every j from 1 to M by using $C_{jk}x_k^0$ of every k from 1 to N (step S28).

Then, the initial value calculation unit 33a sets the variable j indicative of the identification number of the constraint as j = 1 (step S29). The initial value calculation unit 33a calculates $\Delta y_j$ by using an expression of $\Delta y_j = f(h_j^{YX})$ - $y_j$ and updates V by using an expression of $V = V + (\lambda_j/2)(f(h_j^{YX}))^2$ (step S30).

Then, the initial value calculation unit 33a updates $h_i^{XY}$ of every i from 1 to N by using the following expression: $h_i^{XY} = h_i^{XY} + F_{ij}\Delta y_j$ (step S31).

After the processing of step S31, the initial value calculation unit 33a determines whether j = M holds (step S32). In the case where it is determined that j = M does not hold, j = j + 1 is set (step S33), and the processing from step S30 is repeated.

In the case where it is determined that j = M holds, the initial value calculation unit 33a ends the initialization process.

Next, an example of the ΔH calculation procedure in step S13 of FIG. 4 is described.

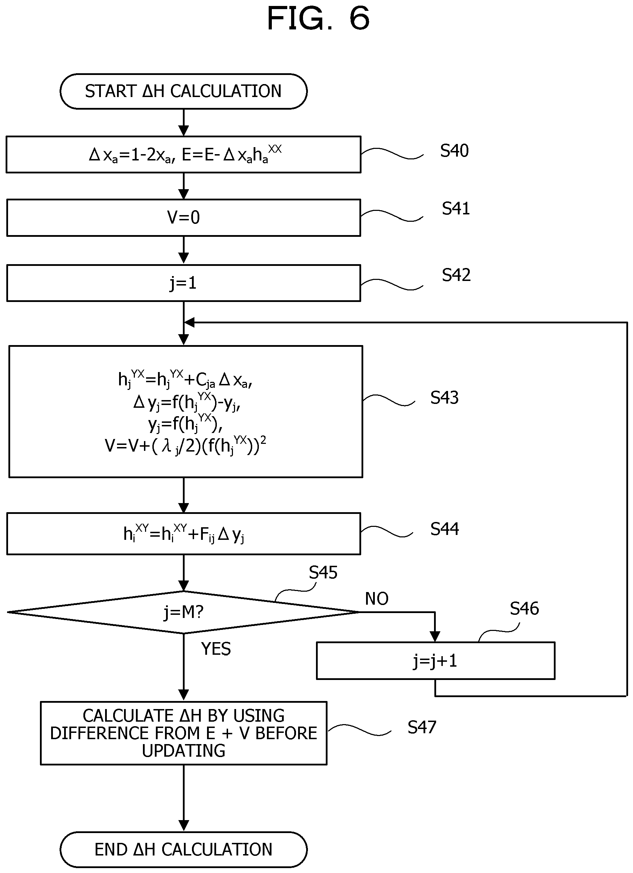

FIG. 6 is a flowchart illustrating a flow of the example of the ΔH calculation procedure. FIG. 6 illustrates an example of the case where $X_a$ is selected as the flip candidate state variable.

The Δx calculation unit 33d calculates $\Delta x_a$ which is the change amount of the value of $x_a$ by using an expression of $\Delta x_a = 1 - 2x_a$. The E updating and holding unit 33e calculates the updated value of E by using an expression of $E = E - \Delta x_a h_a^{XX}$ (step S40).

The V updating and holding unit 33f initializes V to set V = 0 (step S41). The h&y updating and holding unit 33b and the V updating and holding unit 33f set the variable j indicative of the identification number of the constraint as j = 1 (step S42). Then, the h&y updating and holding unit 33b calculates the updated value of $h_j^{YX}$ due to the change in the value of $x_a$ by using an expression of $h_j^{YX} = hj^{YX} + C_{ja}\Delta x_a$ and calculates $\Delta y_j$ due to the change in the value of $x_a$ by using an expression of $\Delta y_j = f(h_j^{YX}) - y_j$. By using $h_j^{yx}$ before the updating, $y_j$ may be represented as $y_j = f(h_j^{YX})$. By using the updated value of $h_j^{YX}$, the V updating and holding unit 33f calculates an updated value of V due to the change in the value of $x_a$ by using the following expression: $V = V + (\lambda_j/2)(f(h_j^{YX}))^2$ (step S43).

Then, the h&y updating and holding unit 33b calculates the updated value of $h_i^{XY}$ of every i from 1 to N due to the change in the value of $x_a$ by using the following expression: $h_i^{XY} = h_i^{XY} + F_{ij}\Delta y_j$ (step S44).

After the processing of step S44, the h&y updating and holding unit 33b and the V updating and holding unit 33f determine whether j = M holds (step S45). In the case where it is determined that j = M does not hold, j = j + 1 is set (step S46), and the processing from step S43 is repeated.

In the case where it is determined that j = M holds, the ΔH calculation unit 33g calculates ΔH by calculating the difference between E + V after the updating due to the change in the value of $x_a$ and E + V before this updating (step S47) and ends the calculation of ΔH.

Since ΔE due to the change in the value of $x_a$ may be represented as $\Delta E = -\Delta x_a h_a^{XX}$ and ΔV which is the change amount of V due to the change in the value of $x_a$ may be represented as $\Delta V = -\Delta x_a h_a^{XY}$, the ΔH calculation unit 33g may also calculate ΔH by using the following expression: $\Delta H = -\Delta x_a(h_a^{XX} + h_a^{XY})$.

The order of the processes illustrated in FIGs. 4 to 6 is merely exemplary and may be changed as appropriate.

With the data processing apparatus 20 and the method of processing data as described above, similar effects to those of the data processing apparatus 10 and the method of processing data according to the first embodiment may be obtained. For example, in the calculation of the updated value of $h_j^{YX}$ for calculating ΔH, it is sufficient that M coefficients in a certain column of the matrix C be read in the processing of step S43. Thus, the amount of calculation may be decreased compared to the case where the flip determination for a certain state variable is performed by using all the elements of the matrix C. Furthermore, the amount of data read at a time from the storage unit 32 may be decreased.

In the processing of step S44, when the number of auxiliary variables ($y_j$) the values of which change due to the change in the value of $x_a$ is p, the number of coefficients read from the matrix F for updating $h_i^{XY}$ may be Np. Accordingly, the number of coefficients read from the matrix C and the matrix F for updating the local fields due to the change in the value of $x_a$ is M + Np.

As has been described, the processing content described above may be realized by causing the data processing apparatus 20 to execute a program.

The program may be recorded in a computer-readable recording medium (for example, the recording medium 26a). As the recording medium, for example, a magnetic disk, an optical disk, a magneto-optical disk, a semiconductor memory, or the like may be used. Examples of the magnetic disk include an FD and an HDD. Examples of the optical disk include a CD, a CD-recordable (R)/rewritable (RW), a DVD, and a DVD-R/RW. The program may be recorded in a portable-type recording medium to be distributed. In this case, the program may be copied from the portable-type recording medium to another recording medium (for example, the HDD 23) to be executed.

(Third Embodiment)

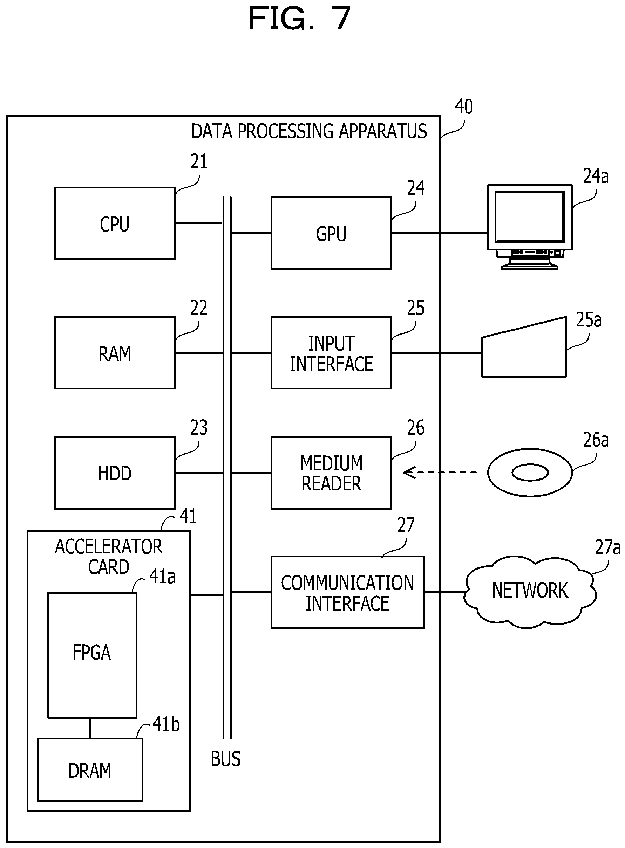

FIG. 7 illustrates an example of a data processing apparatus according to a third embodiment. In FIG. 7, the same elements as the elements illustrated in FIG. 2 are denoted by the same reference signs.

A data processing apparatus 40 according to the third embodiment includes an accelerator card 41 coupled to the bus.

The accelerator card 41 is a hardware accelerator that searches for a solution to a discrete optimization problem. The accelerator card 41 includes an FPGA 41a and a DRAM 41b.

In the data processing apparatus 40 according to the third embodiment, the FPGA 41a performs, for example, the processes by the control unit 31 and the search unit 33 illustrated in FIG. 3.

The DRAM 41b functions as the storage unit 32 illustrated in FIG. 3.

A plurality of accelerator cards 41 may be provided. In this case, for example, the processing (for example, the processing of steps S12 to S16 illustrated in FIG. 4) for the replicas may be performed in parallel.

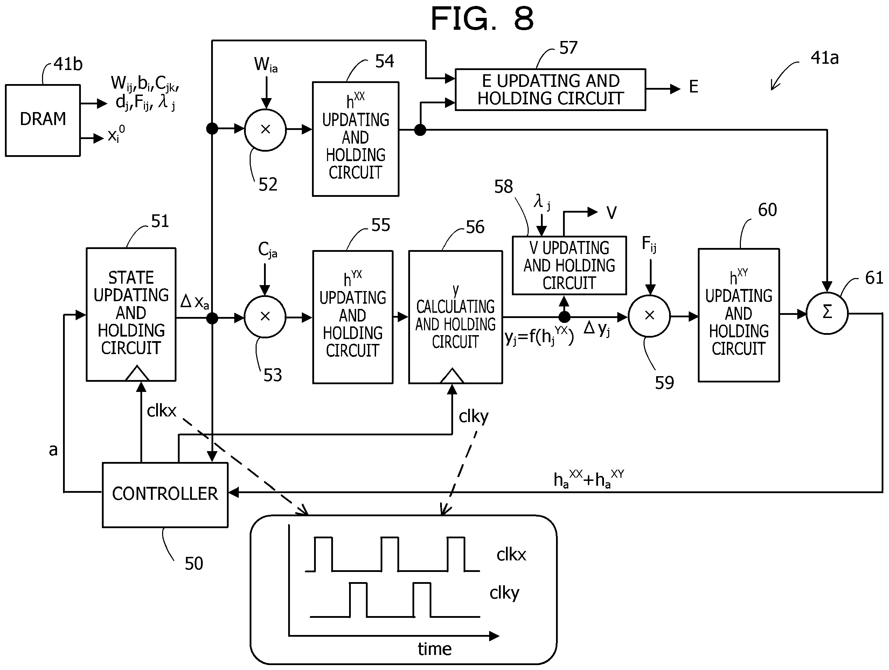

FIG. 8 is a diagram illustrating an example of the configuration of the FPGA.

The FPGA 41a includes a controller 50, a state updating and holding circuit 51, multipliers 52 and 53, an $h^{XX}$ updating and holding circuit 54, an $h^{YX}$ updating and holding circuit 55, a y calculating and holding circuit 56, an E updating and holding circuit 57, a V updating and holding circuit 58, a multiplier 59, an $h^{XY}$ updating and holding circuit 60, and an addition circuit 61.

The controller 50 controls portions of the FPGA 41a. For example, as illustrated in FIG. 8, the controller 50 generates and outputs clock signals (clkx, clky) for determining operation timing of the state updating and holding circuit 51 and the y calculating and holding circuit 56.

The controller 50 has the function of selecting the flip candidate state variable and the function of determining whether to allow the change in the value of the flip candidate state variable based on an addition result of two types of local fields output by the addition circuit 61. For example, in the case where $x_a$ is selected as the flip candidate state variable, the controller 50 outputs the identification number = a. Based on $h_a^{XX} + h_a^{XY}$ which is the addition result output by the addition circuit 61 and $\Delta x_a$ output by the state updating and holding circuit 51, the controller 50 calculates $\Delta H = -\Delta x_a(h_a^{XX} + h_a^{XY})$. The controller 50 determines whether to allow the change in the value of $x_a$ based on a result of comparison between $\Delta H$ and a noise value obtained based on a random number and the value of the temperature parameter.

The state updating and holding circuit 51 includes, for example, a register, a static random-access memory (SRAM), or the like and holds values of N state variables $x_i$ (i = 1 to N). An initial value $x_i^0$ of N state variables $x_i$ is read from the DRAM 41b and held in the state updating and holding circuit 51.

The state updating and holding circuit 51 outputs the change amount in the case where the value of the flip candidate state variable designated by the controller 50 is changed. For example, in the case where a is designated as the identification number of the state variable, the state updating and holding circuit 51 outputs $\Delta x_a$ which is the change amount of $x_a$.

In the case where the state updating and holding circuit 51 receives, from the controller 50, a signal indicative of allowing the change in the value of the flip candidate state variable, the state updating and holding circuit 51 updates the state by changing the value of the state variable from 0 to 1 or from 1 to 0.

The multiplier 52 outputs the products of the change amount of the state variable and the weight values in a row or a column related to the flip candidate state variable out of a matrix W of N × N weight values $W_{ij}$ stored in the DRAM 41b. For example, in the case where the flip candidate state variable is $x_a$, N weight values ($W_{ia}$) in an a column out of the matrix W are read from the DRAM 41b, and the products of $\Delta x_a$ and $W_{ia}$ are output.

The multiplier 53 outputs the products of the change amount of the state variable and the coefficients in a column related to the flip candidate state variable out of the matrix C of M × N coefficients $C_{jk}$ stored in the DRAM 41b. For example, in the case where the flip candidate state variable is $x_a$, M coefficients ($C_{ja}$) in an a column out of the matrix C are read from the DRAM 41b, and the products of $\Delta x_a$ and $C_{ja}$ are output.

The $h^{XX}$ updating and holding circuit 54 includes, for example, a register, an SRAM, or the like, holds N local fields $h_i^{XX}$, and calculates updated values of N local fields $h_i^{XX}$ by adding each of N products output by the multiplier 52 to corresponding $h_i^{XX}$ out of N local fields $h_i^{XX}$. An initial value $b_i$ of N local fields $h_i^{XX}$ is read from the DRAM 41b and held in the $h^{XX}$ updating and holding circuit 54.

The $h^{YX}$ updating and holding circuit 55 includes, for example, a register, an SRAM, or the like, holds M local fields $h_j^{YX}$, and calculates updated values of M local fields $h_j^{yx}$ by adding each of M products output by the multiplier 53 to corresponding $h_j^{yx}$ out of M local fields $h_j^{YX}$. An initial value $d_j$ of M local fields $h_j^{yx}$ is read from the DRAM 41b and held in the $h^{YX}$ updating and holding circuit 55.

The y calculating and holding circuit 56 calculates $y_j$ which is M auxiliary variables and a difference ($\Delta y_j$) from the previously calculated $y_j$. In the case where $y_j$ is an auxiliary variable related to the inequality constraint, it may be represented as $y_j = f(h_j^{YX}) = \max[0, h_j^{YX}]$ as described above. In the case where $y_j$ is an auxiliary variable related to the equality constraint, it may be represented as $y_j = f(h_j^{YX}) = (h_j^{YX})^2$ as described above. In the case where $y_j$ is an auxiliary variable related to the absolute value constraint, it may be represented as $y_j = f(h_j^{YX}) = abs(h_j^{YX})$ as described above.

Although the y calculating and holding circuit 56 may be a circuit that performs calculation of $f(h_j^{YX})$ corresponding to any of the above plurality of constraint conditions, the y calculating and holding circuit 56 may be a circuit that performs calculation of $f(h_j^{YX})$ corresponding to each of the above plurality of constraint conditions. For example, the y calculating and holding circuit 56 may include three types of circuits that respectively calculate the three types of $f(h_j^{YX})$ described above, and the circuit to be used may be switched under the control of the controller 50.

For example, the y calculating and holding circuit 56 includes a register, an SRAM, or the like and holds M auxiliary variables $y_j$ having been calculated.

For example, the E updating and holding circuit 57 includes a register, an SRAM, or the like, holds E that is the value of the evaluation function indicated in Expression (1), and calculates the updated value of E. For example, in the case where the change in the value of $x_a$ is allowed, the updated value of E is obtained by using the following expression: $E = E - \Delta x_a h_a^{XX}$. As an initial value of E, 0 is set in the E updating and holding circuit 57.

For example, the V updating and holding circuit 58 includes a register, an SRAM, or the like, holds V that is the entire magnitude of M constraint terms indicated in Expression (7), and calculates the updated value of V. As an initial value of V, 0 is set in the V updating and holding circuit 58.

The multiplier 59 outputs the product of $\Delta y_j$ and $F_{ij}$ read from the DRAM 41b.

The $h^{XY}$ updating and holding circuit 60 includes, for example, a register, an SRAM, or the like, holds N local fields $h_i^{XY}$, and calculates the updated values of N local fields $h_i^{XY}$ by adding $F_{ij}\Delta y_j$, for each j, output by the multiplier 59 to corresponding $h_i^{XY}$ out of N local fields $h_i^{XY}$. As an initial value of N local fields $h_i^{XY}$, 0 is set in the $h^{XY}$ updating and holding circuit 60.

The addition circuit 61 outputs the addition result of the local field held in the $h^{XY}$ updating and holding circuit 60 and the local field held by the $h^{XX}$ updating and holding circuit 54. This addition result is used by the controller 50 for the calculation of $\Delta H$. In the case where the value of $x_a$ changes, the addition circuit 61 outputs $h_a^{XX} + h_a^{XY}$ as illustrated in FIG. 8.

The controller 50 may calculate $\Delta E$ from E before and after the updating output by the E updating and holding circuit 57 and $\Delta V$ from V before and after the updating output by the V updating and holding circuit 58 so as to calculate $\Delta H = \Delta E + \Delta V$. The controller 50 may calculate $H = E + V$ from E before the updating output by the E updating and holding circuit 57 and V before the updating output by the V updating and holding circuit 58 so as to calculate $\Delta H$ from the difference between $E + V$ before the updating and the sum of E and V after the updating. In these cases, the multiplier 59, the $h^{XY}$ updating and holding circuit 60, and the addition circuit 61 may be omitted.

Also with the data processing apparatus 40 according to the third embodiment as described above, the effects similar to those of the data processing apparatus 20 according to the second embodiment are obtained.

Although aspects of the data processing apparatus, the program, and the method of processing data according to the present disclosure have been described above based on the embodiments, the embodiments are merely exemplary and not limited to the above description.

For example, a spin variable ($s_i$) having a value of -1 or 1 may be used as the state variable. In this case, the above-described state variable ($x_i$) may be set to $x_i = (s_i + 1)/2$.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

**Claims**

1. A data processing apparatus of searching for a combination of values of a plurality of state variables with which a value of an evaluation function of an Ising-type which includes the plurality of state variables becomes a local minimum or a local maximum, the data processing apparatus comprising:

a storage unit configured to store a plurality of first local fields representative of a plurality of first change amounts of the value of the evaluation function in a case where a value of each of the plurality of state variables changes, a plurality of first coefficients indicative of strength of influence of each of the plurality of state variables on each of a plurality of constraint terms representative of a constraint condition, and a plurality of second local fields represented by a sum of a total sum of products of each of the plurality of first coefficients and each of the plurality of state variables and a second coefficient related to the constraint condition; and

a processing unit configured to:

read, from the storage unit, a first coefficient, out of the plurality of first coefficients, related to a first state variable which is any of the plurality of state variables, that calculates updated values of the plurality of second local fields in a case where a value of the first state variable changes based on the first coefficient; calculate, in the case where the value of the first state variable changes, a second change amount of a sum of the evaluation function and an entire magnitude of the plurality of constraint terms based on the updated values and a first local field, out of the plurality of first local fields, related to the first state variable; and determine whether to allow a change in the value of the first state variable based on a result of comparison between the second change amount and a predetermined value.

2. The data processing apparatus according to claim 1, wherein,
in a case where it is determined that the change in the value of the first state variable is allowed, the processing unit changes the value of the first state variable and performs an updating process in which the plurality of first local fields and the plurality of second local fields are updated.

3. The data processing apparatus according to claim 2, wherein,
the processing unit searches for the combination of the values of the plurality of state variables with which the value of the evaluation function becomes the local minimum or the local maximum by performing, for each of the plurality of state variables, processing of the reading of the first coefficient, the calculating of the updated values, the calculating of the second change amount, and the determining of whether to allow the change in the value of the first state variable and by performing the updating process.

4. The data processing apparatus according to any one of claims 1 to 3, wherein

a plurality of third coefficients indicate strength of influence of each of the plurality of constraint terms on the first state variable, wherein
the processing unit
calculates a third local field that is a total sum of products of each of the plurality of constraint terms calculated by using the updated values of the plurality of second local fields in a case where the first state variable changes and each of the plurality of third coefficients and
calculates the second change amount by using a product of the change amount of the first state variable and a sum of the first local field and the third local field.

5. The data processing apparatus according to any one of claims 1 to 4, wherein,
the constraint condition is an inequality constraint, an equality constraint, or an absolute value constraint.

6. A program of searching for a combination of values of a plurality of state variables with which a value of an evaluation function of an Ising-type which includes the plurality of state variables becomes a local minimum or a local maximum, the program including instructions which, when the program is executed by a computer, cause the computer to execute processing including:

reading a first coefficient, out of a plurality of first coefficients, related to a first state variable which is any of a plurality of state variables from a storage unit that stores a plurality of first local fields representative of a plurality of first change amounts of the value of the evaluation function in a case where a value of each of the plurality of state variables changes, the plurality of first coefficients indicative of strength of influence of each of the plurality of state variables on each of a plurality of constraint terms representative of a constraint condition, and a plurality of second local fields represented by a sum of a total sum of products of each of the plurality of first coefficients and each of the plurality of state variables and a second coefficient related to the constraint condition; calculating updated values of the plurality of second local fields in the case where a value of the first state variable changes based on the first coefficient;

calculating, in the case where the value of the first state variable changes, a second change amount of a sum of the evaluation function and an entire magnitude of the plurality of constraint terms based on the updated values and a first local field, out of the plurality of first local fields, related to the first state variable; and

determining whether to allow a change in the value of the first state variable based on a result of comparison between the second change amount and a predetermined value.

7. A computer-implemented method of searching for a combination of values of a plurality of state variables with which a value of an evaluation function of an Ising-type which includes the plurality of state variables becomes a local minimum or a local maximum, the method comprising:

reading a first coefficient, out of a plurality of first coefficients, related to a first state variable which is any of a plurality of state variables from a storage unit that stores a plurality of first local fields representative of a plurality of first change amounts of the value of the evaluation function in a case where a value of each of the plurality of state variables changes, the plurality of first coefficients indicative of strength of influence of each of the plurality of state variables on each of a plurality of constraint terms representative of a constraint condition, and a plurality of second local fields represented by a sum of a total sum of products of each of the plurality of first coefficients and each of the plurality of state variables and a second coefficient related to the constraint condition;

calculating updated values of the plurality of second local fields in the case where a value of the first state variable changes based on the first coefficient;

calculating, in the case where the value of the first state variable changes, a second change amount of a sum of the evaluation function and an entire magnitude of the plurality of constraint terms based on the updated values and a first local field, out of the plurality of first local fields, related to the first state variable; and

determining whether to allow a change in the value of the first state variable based on a result of comparison between the second change amount and a predetermined value.

# FIG. 1

$$h_i^{XX} = \sum_{k=1}^{N} W_{ik} x_k + b_i \qquad h_i^{XY} = \sum_{j=1}^{M} F_{ij} y_j$$

$$h_j^{YX} = \sum_{k=1}^{N} C_{jk} x_k + d_j \xrightarrow[\text{CHANGES}]{x_i} h_j^{YX} = h_j^{YX} + C_{ji} \Delta x_i$$

$$y_j = f\left(h_j^{YX}\right) \qquad \begin{array}{l}\text{INEQUALITY}\\ \text{CONSTRAINT:}\end{array} f(h_j^{YX}) = \max(0, h_j^{YX})$$

$$E = -\sum_{i=1}^{N}\sum_{j>i}^{N} W_{ij}\, x_i x_j - \sum_{i=1}^{N} b_i x_i \qquad V = \frac{1}{2}\sum_{j=1}^{M} \lambda_j y_j^2$$

$$\Delta H = \Delta E + \Delta V = -\left(h_i^{XX} + h_i^{XY}\right) \cdot \Delta x_i$$

# FIG. 2

DATA PROCESSING APPARATUS 20

21 CPU

24 GPU — 24a

22 RAM

25 INPUT INTERFACE — 25a

23 HDD

26 MEDIUM READER — 26a

27 COMMUNICATION INTERFACE — NETWORK 27a

BUS

# FIG. 3

# FIG. 4

```
            START

    ACCEPT INPUT              S10

    INITIALIZATION PROCESS    S11

    SELECT STATE VARIABLE     S12

    CALCULATE ΔH              S13

                    S14
    FLIP DETERMINATION  ─────── FLIP DISABLED

         FLIP ENABLED

    UPDATING PROCESS          S15

                    S16
    END CONDITION SATISFIED? ─── YES

            NO          S17
                                OUTPUT CALCULATION   S19
    REPLICA EXCHANGE CYCLE?  NO    RESULT

         YES

    EXCHANGE REPLICA          S18

                            END
```

# FIG. 5

$$\text{START INITIALIZATION PROCESS}$$

$$h_i^{XX}=b_i,\ h_i^{XY}=0,\ h_j^{YX}=d_j \quad S20$$

$$y_j=f(h_j^{YX}) \quad S21$$

$$h_i^{XY}=h_i^{XY}+F_{ij}y_j \quad S22$$

$$k=1 \quad S23$$

$$E=E-x_k^0 h_k^{XX} \quad S24$$

$$h_i^{XX}=h_i^{XX}+W_{ik}x_k^0 \quad S25$$

$$k=N? \quad S26$$

NO

$$k=k+1 \quad S27$$

YES

$$h_j^{YX}=h_j^{YX}+C_{jk}x_k^0 \quad S28$$

$$j=1 \quad S29$$

$$\Delta y_j=f(h_j^{YX})-y_j,\ V=V+(\lambda_j/2)(f(h_j^{YX}))^2 \quad S30$$

$$h_i^{XY}=h_i^{XY}+F_{ij}\Delta y_j \quad S31$$

$$j=M? \quad S32$$

NO

$$j=j+1 \quad S33$$

YES

$$\text{END INITIALIZATION PROCESS}$$

# FIG. 6

START ΔH CALCULATION

$\Delta x_a = 1 - 2x_a,\ E = E - \Delta x_a h_a^{XX}$ — S40

$V = 0$ — S41

$j = 1$ — S42

$h_j^{YX} = h_j^{YX} + C_{ja}\Delta x_a,$
$\Delta y_j = f(h_j^{YX}) - y_j,$
$y_j = f(h_j^{YX}),$
$V = V + (\lambda_j/2)(f(h_j^{YX}))^2$ — S43

$h_i^{XY} = h_i^{XY} + F_{ij}\Delta y_j$ — S44

S45 $j = M?$

NO

$j = j + 1$ — S46

YES

CALCULATE ΔH BY USING DIFFERENCE FROM E + V BEFORE UPDATING — S47

END ΔH CALCULATION

# FIG. 7

40

## DATA PROCESSING APPARATUS

21

CPU

22

RAM

23

HDD

41

ACCELERATOR
CARD

41a

FPGA

41b

DRAM

BUS

24

GPU

24a

25

INPUT
INTERFACE

25a

26

MEDIUM
READER

26a

27

COMMUNICATION
INTERFACE

27a

NETWORK

# FIG. 8

Europäisches
Patentamt

European
Patent Office

Office européen
des brevets

## EUROPEAN SEARCH REPORT

**Application Number**

**EP 22 15 9139**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 3 135 137 A1 (TOSHIBA KK [JP]; TOSHIBA DIGITAL SOLUTIONS CORP [JP]) 1 October 2020 (2020-10-01) * paragraphs [0016] – [0037] * ----- | 1-7 | INV. G06N7/00 G06N20/00 |

**TECHNICAL FIELDS SEARCHED (IPC)**

G06N

The present search report has been drawn up for all claims

| Place of search | Date of completion of the search | Examiner |
|---|---|---|
| The Hague | 13 August 2022 | Bykowski, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 9139

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2022

| Patent document cited in search report | | Publication date | Patent family member(s) | | Publication date |
|---|---|---|---|---|---|
| CA 3135137 | A1 | 01-10-2020 | CA | 3135137 A1 | 01-10-2020 |
| | | | CN | 113646782 A | 12-11-2021 |
| | | | JP | WO2020196866 A1 | 01-10-2020 |
| | | | US | 2022012307 A1 | 13-01-2022 |
| | | | WO | 2020196866 A1 | 01-10-2020 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019179364 A

- JP 2020204928 A

**Non-patent literature cited in the description**

- **V.S.DENCHEV ; N.DING ; S.V.N.VISHWANATHAN ; H.NEVEN.** Robust classification with adiabatic quantum optimization. *Proc. ICML'12,* 2012, 1003-1010